# EUROPÄISCHE PATENTSCHRIFT

(11) **EP 1 048 439 B1**
(45) Veröffentlichungstag und Bekanntmachung des Hinweises auf die Patenterteilung: **26.10.2005**
(21) Anmeldenummer: 00108420.1
(22) Anmeldetag: 18.04.2000
(51) Int. Cl.: B29C 65/14, B29C 65/16, B23K 26/08

(54) **Verfahren und Vorrichtung zum Schweissen**
Welding process and apparatus
Procédé et dispositif de soudage

(30) Priorität: 29.04.1999 DE 19919191
(43) Veröffentlichungstag der Anmeldung: 02.11.2000
(73) Patentinhaber: bielomatik Leuze GmbH + Co. KG, 72639 Neuffen (DE)
(72) Erfinder: Korte, Jörn, Dr., 72584 Hülben (DE)
(74) Vertreter: Patentanwälte Ruff, Wilhelm, Beier, Dauster & Partner

(56) Entgegenhaltungen:
- EP-A1- 0 483 569
- EP-A1- 0 773 164
- EP-A2- 0 839 634
- WO-A1-00/13763
- WO-A1-95/26869
- DE-A1- 4 225 679
- DE-A1- 4 432 081
- FR-A1- 2 165 906
- JP-A- 62 216 729
- POTENTE H ET AL: "LASERSCHWEISSEN VON THERMOPLASTEN" PLASTVERARBEITER, ZECHNER UND HUETHIG VERLAG GMBH. SPEYER/RHEIN, DE, Bd. 46, Nr. 9, 1. September 1995 (1995-09-01), Seiten 42-44,46, XP000535361 ISSN: 0032-1338
- BAUM G: "EIN NEUARTIGES STRAHLFUEHRUNGSSYSTEM FUER DIE RAUMLICHE LASERMATERIALBEARBEITUNG" WERKSTATTSTECHNIK, SPRINGER VERLAG. BERLIN, DE, Bd. 81, Nr. 7, 1. Juli 1991 (1991-07-01), Seiten 427-430, XP000287303 ISSN: 0340-4544
- KORTE JÖRN: 'Laserschweissen von Thermoplasten', 05 Dezember 1997, UNIVERSITCT - GESAMTHOCHSCHULE PADERBORN XP002987861 * Seite 65 - Seite 74 * * Seite 93 - Seite 101 *
- POTENTE H., KORTE J., STUTZ R.: 'Laser-Durchstrahlschweissen von PE-HD' KUNSTSTOFFE Bd. 87, Nr. 3, 01 M{rz 1997, Seiten 348 - 350, XP000703688

## Beschreibung

Die Erfindung betrifft ein Verfahren sowie eine Vorrichtung zum Schweißen einer Verbindung, insbesondere für thermoplastische Kunststoffe, mit einer Energiestrahlung, deren Wellenlänge im oder nahe beim Infrarotbereich liegen kann. Die kurzwellige Strahlung kann eine Wellenlänge zwischen 0,7 bis 2,0 µm haben. Die beiden Fügezonen oder Fügeflächen werden während der Plastifizierung in Deckung bzw. in Kontakt miteinander gehalten. Dadurch oder auf andere Weise wird zuerst die eine Fügezone und erst danach die andere Fügezone plastifiziert, insbesondere dadurch, daß sie mit der plastifizierten ersten Fügezone benetzt und so durch Wärmeleitung ebenfalls plastifiziert wird.

Bei Stumpfschweißungen werden beide Fügezonen getrennt voneinander, jedoch gleichzeitig, plastifiziert und im plastischen Zustand dann gegeneinander gepreßt, um zu verschweißen. Durch den Anpreßdruck kann plastifizierter Werkstoff aus der Verbindungsfuge austreten und dann einen Wulst bilden, der meist unerwünscht ist. Die Erwärmung kann auch durch Vibration, nämlich durch Reibung an der Fügefläche bzw. durch Reibung beider Fügeflächen aneinander, erfolgen. Dadurch entstehen Abriebpartikel, welche bei vielen Produkten stören und nur sehr schwer von diesen Produkten zu entfernen sind. Beim Durchstrahl-Schweißen (vgl. WO 95/26869) dagegen wird die Schweißenergie den einander abdeckenden Fügeflächen zugeführt, beispielsweise durch den freiliegenden Querschnitt und dessen Fügefläche hindurch auf die Fügezone des abgedeckten Querschnittes. Dessen an die Fügefläche anschließende Fügezone wird dadurch als Teilschicht des Querschnittes plastifiziert. Danach benetzt die plastifizierte Werkstoffmasse durch Fluß, gegenseitige Querbewegung oder Anpressung die andere Fügefläche und plastifiziert auch deren Fügezone. Dadurch kommt es zur Verschweißung. Erfolgt diese Verschweißung entlang der Verbindung bzw. Naht fortschreitend, so sind Nahtabschnitte bereits fest verschweißt, während andere noch plastisch bzw. zu plastifizieren sind. Dies erschwert das gleichmäßige Anpressen der Fügeflächen in den verschiedenen Nahtabschnitten und auch die Nivellierung der Fügeflächen durch Abschmelzen. Mit Abschmelzen können Toleranzunterschiede in Form und Lage der jeweiligen Fügefläche ausgeglichen werden.

Es ist denkbar, die gesamte Fügezone gleichzeitig mit der Energiestrahlung zu beaufschlagen, beispielsweise mit einer Mehrzahl benachbarter Diodenlaser bzw. Strahlfelder. Hierbei ergibt sich ein großer Vorrichtungsaufwand, insbesondere wenn der Nahtverlauf nicht geradlinig ist. Außerdem ist der Strahlausgang nicht für Werkstücke unterschiedlicher Formen geeignet.

Die FR-A 2 165 906 beschreibt ein Verfahren, um den Mantel einer Tube mit dem Halsstück zu verbinden. Dazu werden die ineinander geschobenen Teile von außen durch einen Laserstrahl erwärmt und die Tube wird gleichzeitig gedreht, damit der Laserstrahl langsam den gesamten Umfang, ggf. auch mehrfach, bestreicht. Um zu verhindern, dass der außen liegende Mantel zu stark oder ausschließlich erwärmt wird, wird durch ein nachlaufendes Kühlrad die Naht von außen heruntergekühlt, um zu verhindern, dass die Oberfläche wegschmilzt, bevor die Schweißnaht erwärmt ist.

Aus der EP-A 0 773 164 ist es bekannt geworden, mittels eines hin- und her"bürstenden" Laserstrahls eine Vorwärmung von Folien vorzunehmen, die einen Schlauch mit darin verpackten Gegenständen umgehen. An der vorgewärmten Stelle wird danach eine Trennschweißung mit einem rotierenden mechanisch/thermisch arbeitenden Trennschweißkopf vorgenommen. Die Bewegung der Strahlführung wird über Spiegelbewegungen im Laserstrahl gesteuert.

Der Erfindung liegt die Aufgabe zugrunde, ein Verfahren gemäß Anspruch 1 bzw. eine Vorrichtung gemäß Anspruch 9 zu schaffen, mit welchen Nachteile bekannter Ausbildungen bzw. der beschriebenen Art vermieden werden können. Ferner soll es möglich sein, jede der beiden Fügeflächen über die gesamte Nahtlänge im wesentlichen gleichzeitig zu erweichen bzw. plastifiziert zu halten, so dass die beiden miteinander zu verbindenden Querschnitte oder Bauteile in diesem Zustand noch gegeneinander in die vorbestimmte Lage gebracht werden können, in welcher sie durch die feste Verschweißung verbunden sein sollen. Die Naht soll auch gegen hohe Belastungen bzw. Drücke dicht sowie reißfest bleiben, nämlich gleiche Festigkeit wie an die Naht anschließende oder im Abstand von der Naht liegende, jedoch zu dieser benachbarte Abschnitte der Querschnitte haben. Die Verbindung soll mit geringem Aufwand herzustellen sein, unabhängig vom Nahtverlauf. Diese Aufgabe wird durch die Ansprüche 1 und 9, gelöst.

Erfindungsgemäß wird nur eine der Fügeflächen oder werden beide Fügeflächen vollständig auf eine Zwischentemperatur vorgewärmt, die geringfügig unterhalb der Arbeits- bzw. Schmelztemperatur liegt. Spätestens dann werden die Fügeflächen in gegenseitige Berührung gebracht und die vorgewärmte Fügefläche wird vollends auf Schmelztemperatur erwärmt. Die Schmelze erwärmt dann auf der gesamten Nahtlänge gleichzeitig durch Wärmeleitung auch die andere Fügefläche auf Schmelztemperatur. So fließen die Schmelzen der beiden Fügezonen homogen ineinander und erstarren mit der Abkühlung zur festen Schweißverbindung. Dadurch wird vermieden, daß die Schmelze in irgendeinem Nahtbereich erstarrt, bevor beide Fügezonen aller übrigen Nahtbereiche die Schmelztemperatur erreicht haben, nämlich miteinander verschmolzen sind. Alle Nahtbereiche verschmelzen somit nahezu gleichzeitig bzw. jeder Nahtbereich verschmilzt, so lange alle übrigen Nahtbereiche noch weich genug sind, um die zu verbindenden Bauteile gegeneinander so zu bewegen, daß der erweichte Werkstoff nachgeben bzw. verdrängt werden kann. Die Nahtschmelze erstarrt über die gesamte Nahtlänge und Nahtbreite gleichzeitig oder quasi gleichzeitig, wodurch auch das Entstehen von Spannungen vermieden ist.

Die Vorwärmung kann in mehreren Schritten bzw. kummulierend von einer ersten Zwischentemperatur auf eine nächst höhere Zwischentemperatur erfolgen. Dazu wird das Strahlfeld entlang der Fügezone so schnell bewegt, daß jeder Feldabschnitt der Fügezone zwischen zwei aufeinanderfolgenden Erwärmungen durch das Strahlfeld nicht wieder bis auf die Temperatur der vorangehenden Erwärmung abkühlen kann. Beispielsweise können die Erwärmungen in einer, zwei oder drei Sekunden drei bis zehn oder mehr Mal erfolgen, wobei auch jeder ganzzahlige Zwischenwert zwischen drei und zwölf möglich ist. Diese schrittweise oder allmähliche Erwärmung der Fügezone erfolgt, während die Fügeflächen unter Druck in Berührung miteinander stehen. Sobald die eine Fügefläche über die gesamte Nahtlänge gleichzeitig weich geworden bzw. plastifiziert ist, kann der zugehörige Bauteil durch den Anpreßdruck gegenüber dem anderen Bauteil um ein gewünschtes Maß bewegt werden. Dadurch können Toleranzunterschiede in den Maßen der Bauteile oder in der Oberflächenform der Fügeflächen ausgeglichen werden. Diese Bewegung ist anschlagbegrenzt, entweder durch Anschläge an den Bauteilen selbst oder durch Anschläge an der Preß- oder Spannvorrichtung. Mit ihr werden die Bauteile während der Herstellung der Verbindung gehaltert sowie gegeneinander gepreßt.

Der Energiestrahl durchdringt bei der Vorwärmung und/oder bei der Verschmelzung die eine Fügefläche, die er aufgrund ihrer physikalischen Eigenschaften nicht oder nur geringfügig erwärmt, und trifft auf die unmittelbar benachbarte Fügefläche, welche aufgrund ihrer physikalischen Eigenschaften die Strahlung unter Erwärmung absorbiert, bis sie in Schmelze übertritt, welche die erste Fügefläche ebenfalls bis zur Plastifizierung erwärmt. Auch lange Schweißnähte können dadurch in weniger als 15, 10 oder 5 Sekunden einschließlich der Vorwärmung hergestellt werden. Das Verfahren eignet sich insbesondere für Kunststoffe bzw. für umlaufend geschlossene endlose Nähte, wie sie bei der Verbindung von Behälterteilen vorkommen. Es eignet sich auch für andere Zwecke, z.B. zur komplementären Voranpassung der Fügeflächen, falls diese wieder zerstörungsfrei trennbar sein sollen.

Das Verfahren kann mit bekannten Vorrichtungen, nämlich mit einen sogenannten Beschriftungs- bzw. Scanner-Kopf durchgeführt werden, welcher einen Strahlenausgang für einen Energiestrahl derart hat, daß der Energiestrahl bei feststehendem Kopf kontinuierlich in unterschiedliche Richtungen abgelenkt werden kann. Der Strahlausgang kann aber auch an einem Roboterarm befestigt und dadurch in allen drei Raumachsen gelenkig bewegbar sowie motorisch angetrieben sein, so daß der Strahl bei konstantem Abstand des Strahlausganges von der Naht entlang der Naht zu bewegen ist. Erfindungsgemäß weist die Vorrichtung Steuermittel auf, welche das Strahlfeld aufeinanderfolgend mehrfach über jeden der Feldabschnitte des Fügefeldes bzw. der Naht führen, insbesondere in Zeitabständen von höchstens einer bis sechs oder vier Sekunden. Der Strahlausgang kann durch einen Spiegel oder ein Focusierobjektiv gebildet sein. Weist die Strahlführung zwei aufeinanderfolgende Spiegel auf, die unabhängig voneinander um gesonderte Achsen schwenkbar sind, so läßt sich der Energiestrahl dadurch in zwei zueinander rechtwinkligen Raumachsen simultan bewegen. Mit der Focusieroptik bzw. einem Z-Achsen-Modul läßt sich das Strahlfeld bei Konstanthaltung seiner Flächenausdehnung auch in der dritten Raumachse motorisch bewegen. Dadurch können variierende Abstände zwischen Strahlausgang und Fügefeld ausgeglichen werden.

Diese und weitere Merkmale der Erfindung gehen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in den Zeichnungen dargestellt und werden im folgenden näher erläutert. In den Zeichnungen zeigen:
- Fig. 1: eine erfindungsgemäße Vorrichtung in vereinfachter perspektivischer Darstellung;
- Fig. 1a: ein Detail einer Vorrichtung nach Fig. 1 in vergrößerter Darstellung und
- Fig. 2 bis 6: verschiedene Ausführungsbeispiele von Verbindungs-Konfigurationen mit deren Fügeflächen und Querschnitten.

Die Vorrichtung 1 hat einen Beschriftungs- bzw. Scanner-Kopf 2 mit einem Sockel 4 und eine Einrichtung 3 zur stationären Halterung des zu bearbeitenden Werkstückes. Die stationäre Basis 5 des Halters 3 ist mit dem Sockel 4 fest verbunden. Jede der Einheiten 2, 3 ist unabhängig von der anderen auswechselbar an einem Grundgestell angeordnet.

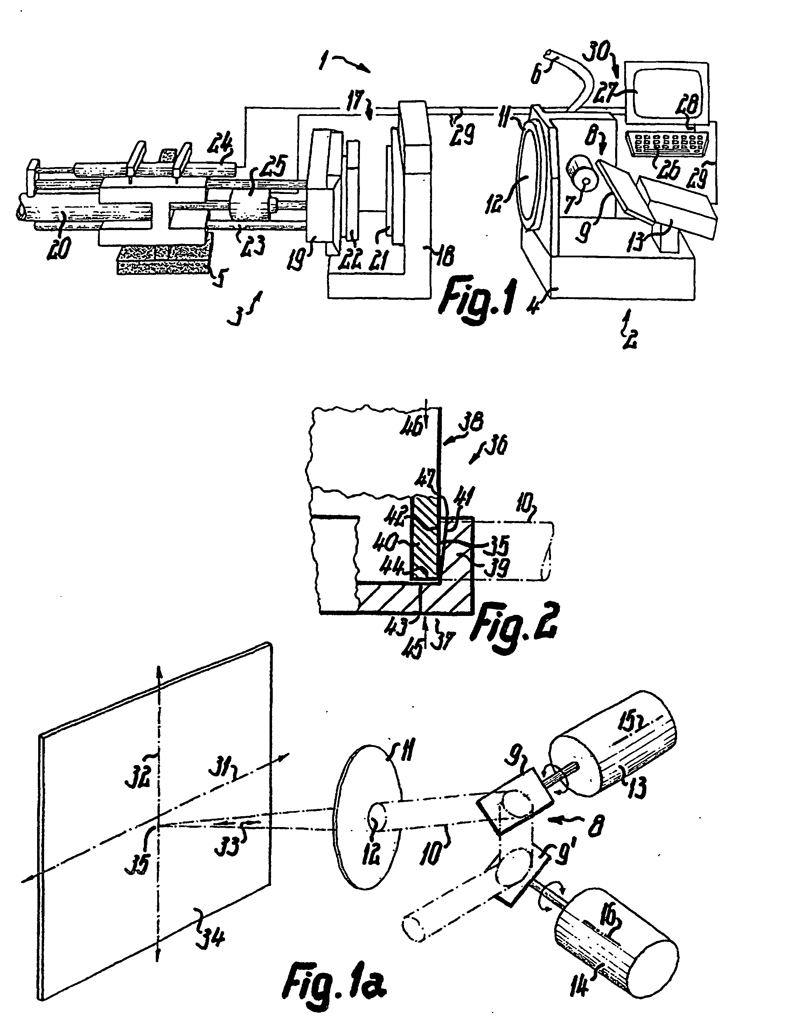

Der Kopf 2 hat eine Strahlführung mit einem Lichtleiter 6, dessen Ausgang 7, einer Lenkeinrichtung 8 für den Strahl, einem, zwei oder mehr Spiegeln 9, einem Objektiv 11, einem Strahlausgang 12 und einem Motor 13 bzw. 14 für jeden Spiegel 9, die am Sockel 4 angeordnet sind. Der Leiter 6, beispielsweise ein Glasfaserkabel, leitet das polarisierte Laserlicht von einer Lichtquelle zum Zwischenausgang 7. Von diesem trifft der Strahl 10 unmittelbar auf den Spiegel 9, von dem der Strahl 10 unmittelbar durch das Objektiv 11 geführt wird. Der Spiegel 9 oder das Objektiv 11 bildet den Strahlausgang 12, von welchem der Strahl über eine freie Strecke direkt auf das Arbeitsfeld des Werkstückes geleitet ist. Der Motor 13 trägt den Spiegel 9 so auf einer Welle, daß die Schwenkachse 15 bzw. 16 in der Spiegelebene und im Winkel zur Achse des Ausgangs 12 liegt. Der Spiegel 9 kann auch um zwei zueinander rechtwinklige Achsen schwenkbar sein. Sein Schwenkwinkel beträgt z.B. 20° bis 30°. Gemäß Fig. 1a ist dem Spiegel 9 ein weiterer Spiegel 9' mit gesondertem Motor 14 vorgeschaltet. Die Schwenkachse 16 des Spiegels 9' liegt im Winkel zur Achse 15 des Spiegels 9 und zur Achse des Focusier-Objektives 11.

Die Einheit 3 hat eine Vorrichtung 17 mit zwei einander gegenüberstehenden Wangen 18, 19 zur gegenseitigen Verspannung der miteinander zu verbindenden Bauteile. Die Wange 18 ist mit den Konsolen 4, 5 fest verbunden. Die Wange 19 ist mit einem Antrieb 20, wie einem Pneumatikzylinder, gegenüber der Wange 18 bewegbar. An jeder Wange 18 bzw. 19 ist eine Backe 21 bzw. 22 auswechselbar befestigt, welche zur sicheren Spannung an das jeweilige Werkstück angepaßt ist und unmittelbar an diesem anliegt. Die Wange 19 ist mit einer Führung 23 reversibel an der Basis 5 gelagert. Ein Aufnehmer 24 mißt den Bewegungsweg der Wange 19 gegenüber der Wange 18 kontinuierlich. Ein Aufnehmer 25 mißt die Kraft kontinuierlich, mit welcher die Wange 19 gegen die Wange 18 bzw. das Werkstück verspannt.

Steuermittel 30 zur Betätigung der Lenkeinrichtung 8 und zur Steuerung des Spannweges sowie der Spannkraft umfassen eine Einrichtung 26 zur Eingabe der zugehörigen Daten, welcher ein elektronischer Datenspeicher mit den entsprechenden Programmen für unterschiedliche Werkstücke zugeordnet ist. Über die Eingabe bzw. Tastatur 26 können diese Programme eingegeben, verändert und so abgerufen werden, daß die Einrichtungen 3, 8 entsprechend dem vorgesehenen Verfahrensablauf arbeiten. Die Daten können auf einem Monitor 27 sichtbar gemacht werden, welcher mit der Eingabe 26 über eine Signalleitung 28 und mit den Einrichtungen 13, 24, 25 sowie mit dem Antrieb 20 über jeweils gesonderte Signal- und Steuerleitungen 29 verbunden ist.

Fig. 1a zeigt stellvertretend für ein Werkstück ein ebenes Arbeitsfeld 34, in dessen Ebene zwei zueinander rechtwinklige Raumachsen 31, 32 gezeigt sind. Eine zu den Achsen 31, 32 rechtwinklige, dritte Raumachse 33 liegt rechtwinklig zum Arbeitsfeld. Mit der Einrichtung 8 wird der Strahl 10 kontinuierlich über das Arbeitsfeld 34 bewegt, indem seine zu den Achsen 31, 32 parallelen Bewegungen überlagert werden. Auf das Feld 34 trifft der Strahl 10 mit einem Strahlfeld 35 auf, dessen Größe durch die Optik 11 bzw. den Abstand zwischen Ausgang 12 und Feld 34 verändert wird. Bei Annäherung des Feldes 34 an den Ausgang 12 wird das Feld 35 größer und umgekehrt kleiner. Erstreckt sich das Feld 34 statt nur in einer Ebene auch in Richtung 33, so wird mit der Optik 11 das Feld 35 über das gesamte Feld 34 konstant groß gehalten.

Das Werkstück 36 umfaßt zwei zu verschweißende Bauteile 37, 38, die gemäß Fig. 2 ein Behälter 38 und ein diesen schließender Deckel 37 aus thermoplastischem Kunststoff sind. Dabei sind die Querschnitte 39, 40, nämlich ein ringförmiger Rand 39 und der Behältermantel 40 miteinander an ringförmigen Fügeflächen 41, 42 ringförmig bzw. durchgehend dicht zu verschweißen. Der Teil 37 wird zur Montage in Richtung 45 bzw. entgegen Richtung 46 auf den Teil 38 aufgesetzt. Die Teile 37, 38 werden mit der Einrichtung 17 in den Richtungen 45, 46 gegeneinander verspannt. Der Abstand zwischen den Flächen 41, 42 nimmt dann in Richtung 45 geringfügig, beispielsweise unter wenigen Winkelgraden, zu. Das in Richtung 46 vorderste Ende des Teiles 38 bzw. des Querschnittes 40 bildet eine Querfläche 44, welche quer bzw. rechtwinklig zu den Flächen 41, 42 liegt und an die Fläche 42 scharfwinklig anschließt. Eine entsprechende Fläche 43 schließt in gleicher Weise an die Fläche 41 an und liegt der Fläche 44 als Anschlag mit Abstand gegenüber. Dadurch liegt die scharfe Übergangskante zwischen den Flächen 42, 44 mit diesem Abstand von der Fläche 43 entfernt unter Spannung an der Schrägfläche 41 an. Der Abstand zwischen dem von der Fläche 43 entfernten Ende 47 der Fläche 41 und der Fläche 43 bestimmt die Breite der Schweißnaht, deren Längsrichtung rechtwinklig zur Zeichenebene liegt. Das zentrisch symmetrische Strahlfeld 35 hat eine Weite oder einen Durchmesser, der gleich dieser Nahtbreite und daher vielfach kleiner als die Nahtlänge ist.

Der Querschnitt 39 ist für den Strahl 10 ohne wesentliche Energieabsorption durchlässig, also transparent. Der Querschnitt 40 absorbiert im Anschluß an die Fläche 35 demgegenüber die Energie des Strahls 10 wesentlich stärker, so daß er durch den Strahl 10 erwärmt wird. Dies kann durch Einlagerung von Zusatz- bzw. Absorptionsstoffen erreicht werden, wie Pigmente, Ruß, Talkum o. dgl.

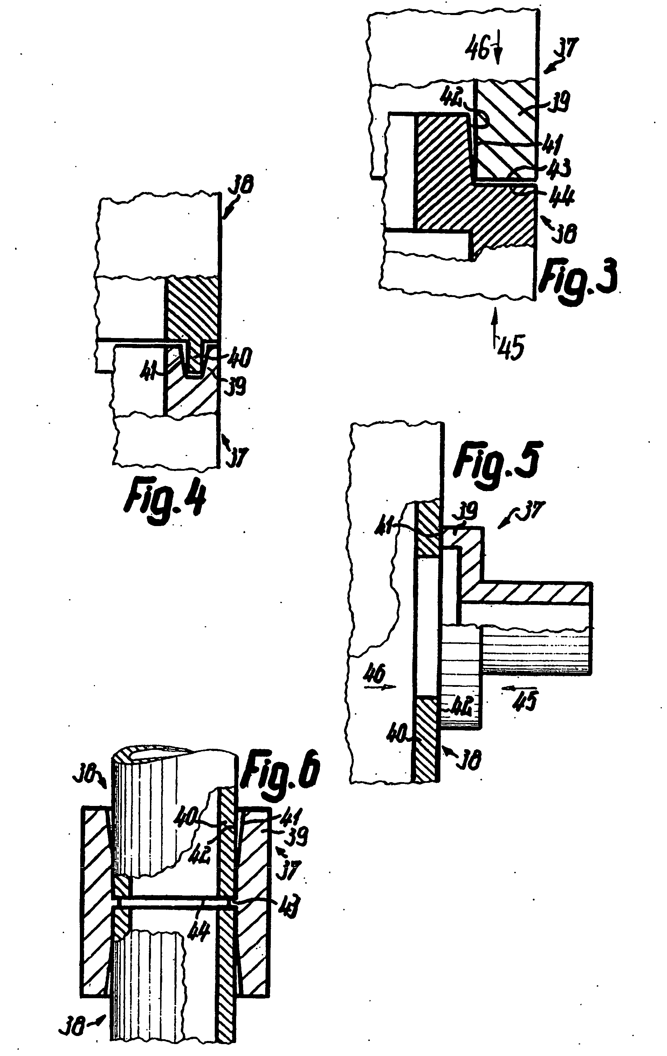

Der Strahl 10 wird mit der Einrichtung 8 vollständig durch den Querschnitt 39 geführt, wobei die Größe des Strahlfeldes 35 auf der Fläche 42 stets konstant gehalten wird. Der Strahl 10 wird gleichzeitig mit der Einrichtung 8 so abgelenkt, daß das Feld 35 mit hoher Geschwindigkeit stets die Fläche 42 über die gesamte Nahtlänge in einer einzigen Richtung abfährt. Dadurch steigt die Temperatur des Querschnittes 40 im Bereich der Fügezone 42 von Raumtemperatur stetig an, nämlich von einer Zwischentemperatur zur nächsthöheren Zwischentemperatur, während der Querschnitt 39 im Bereich der Fügezone 41 zunächst nicht oder allenfalls wesentlich weniger erwärmt wird. Zwischen zwei Durchläufen, in denen das Feld 35 nacheinander auf den Nahtbereich gemäß Fig. 3 fällt, kühlt die Fügezone 42 nur unwesentlich oder gar nicht ab.

Nach einer Vielzahl von mehr als fünf oder zehn Durchläufen ist die Temperatur der Fügezone 42 bis zur Schmelztemperatur angestiegen und die Schmelze dehnt sich über die Nahtbreite bis zur Anlage an der Fläche 41 aus. Dadurch wird die Wärme der Fügezone 42 durch die Fläche 41 in den Querschnitt 39 geleitet, so daß die Fügezone 41 über die gesamte Nahtlänge gleichzeitig ebenfalls Schmelztemperatur erreicht. Zuvor oder gleichzeitig werden durch die Spannkraft 45, 46 die Teile 37, 38 gegeneinander bewegt, bis die nicht plastifizierten Flächen 43, 44 aneinander anschlagen. Die Steuermittel 30 verhindern dabei einen größeren Stellweg durch entsprechende Steuerung des Antriebes 20. Die Schweißschmelze tritt aus dem Spalt zwischen den Zonen 41, 42 nicht aus, sondern wird in diesen Spalt hineingezogen, so daß sich am Ende 47 kein Nahtwulst bildet. Zu Beginn entspricht der Spaltabstand zwischen den Flächen 43, 44 der mittleren Spaltweite zwischen den Flächen 41, 42, wobei diese Spaltweite unter einem oder einem halben Millimeter liegt. Der Rand 39 umgibt den Behältermantel 40 am Außenumfang, so daß das Durchstrahl-Schweißen von der Außenseite des Behälters her erfolgen kann. Nach der Füllung des Spaltes mit Schmelze wird diese abgekühlt und die Naht ist fest sowie durchgehend dicht. Danach wird das Werkstück 36 entspannt und aus der Einrichtung 17 herausgenommen.

Gemäß Fig. 2 liegt die Fläche 42 parallel zu den Richtungen 45, 46 und die Fläche 41 schräg dazu.

Gemäß Fig. 3 liegt umgekehrt die Fläche 41 parallel zur Spannrichtung 45, 46 und die Fläche 42 unter weniger als 2° oder 3° schräg dazu. Die Fläche 43 ist eine ringförmige Endfläche der Wand 39 und nicht eine versenkte Fläche wie in Fig. 2. Die Fläche 44 ist eine gegenüber dem freien Ende der Fläche 42 zurückversetzte Schulterfläche, so daß der Spalt zwischen den Flächen 43, 44 zur Außenseite des Werkstückes frei liegt. Auch durch den Spalt zwischen den Flächen 43, 44 tritt keine Schmelze aus, zumal vermieden ist, daß Schmelze in diesen Spalt eintritt.

In Fig. 4 ist der Querschnitt 40 ein ringförmiger Steg. Er steht im Querschnitt frei über die dickere zugehörige Wandung des Teiles 38 vor, so daß seine Flanken jeweils an eine Schulterfläche dieser Wand anschließen. Diese Schulterflächen bilden die Flächen 43, 44. Beide Stegflanken können als Fügeflächen 42 vorgesehen sein, welche mit den Fügeflächen 41 des Teiles 37 verschweißt werden. Diese Fügeflächen 41 sind durch die Flanken einer Nut im Querschnitt 39 gebildet, deren Nutflanken zum Nutboden spitzwinklig konvergieren. Auch der Nutboden und die Längskante des Steges 40 können die Anschlagflächen bilden. Der Querschnitt 40 ist dünn genug, um ihn als Ganzes in Schmelze zu überführen, bis diese die Nut vollständig ausfüllt und beide Stegflanken mit beiden Nutflanken verschweißt sind.

Gemäß Fig. 5 ist der Querschnitt 40 eine Behälterwand und deren Außenfläche die Fügefläche 42. Der Querschnitt 39 ist ein Steg oder eine Hülse, deren Längs- bzw. Stirnfläche die Fügefläche 41 bildet. Der Steg 39 ist der frei abstehende Rand eines Nippels 37, dessen Durchlaßkanal so an eine Öffnung in der Behälterwand anzuschließen ist, daß die Naht diese Öffnung dicht umgibt. Der Strahl 10 wird hier durch den Rand 39 parallel zu dessen Achse hindurchgeleitet, nämlich auch durch die an den Rand 39 anschließende Stirnwand des Nippels 37, die im Abstand von der Fläche 42 liegt. Die Teile 37, 38 werden rechtwinklig bzw. quer zu den Flächen 41, 42 in den Richtungen 45, 46 gegeneinander gespannt. Gleichzeitig mit dem Plastifizieren werden die Teile 37, 38 in diesen Richtungen 45, 46 einander weiter unter Druck angenähert bis die Steuermittel 30, 24 diesen Weg begrenzen.

Gemäß Fig. 6 werden zwei Teile bzw. Rohre 38 in Längsrichtung oder koaxial aneinander gesetzt und mit dem Teil 37 verbunden. Die Rohre 38 sind von entgegengesetzten Richtungen in die Muffe 37 eingesteckt und schlagen vor der Plastifizierung mit ihren Enden 44 an voneinander abgekehrten Flächen 43 an. Die Flächen 43 sind durch einen Bund gebildet, welcher über den Innenumfang des Teiles 37 vorsteht. Die Fügeflächen 41, 42 haben hier Abstand von den Flächen 44. Bei dieser Ausbildung werden die Rohre 38 nicht parallel zu den Flächen 41, 42 gegeneinander während der Verschweißung bewegt, sondern die Schmelze kann ohne Verspannung von der Fügezone 42 zur Fügezone 41 fließen. Die Flächen 41, 42 können aber auch quer zueinander bewegt werden, z.B. durch radiale Spannung des Querschnittes 39 gegen den Querschnitt 40.

Statt eines einzigen Strahles 10 können auch gleichzeitig mehrere Strahle 10 so vorgesehen sein, daß ihre Strahlfelder 35 über die Länge der Naht verteilt sind. Diese Felder 35 liegen im Abstand voneinander und laufen die Naht mit gleicher oder unterschiedlicher Geschwindigkeit ab. Dadurch kann die Schweißenergie noch schneller in die Querschnitte 39, 40 eingetragen werden, so daß der jeweilige, vom Strahlfeld 35 erwärmte Feldabschnitt der Fläche 42 noch weniger abkühlt, bis er beim nächsten Durchlauf wieder erwärmt wird.

## Patentansprüche

1. Verfahren zum Laserschweißen einer Verbindung, insbesondere für thermoplastische Kunststoffe, zwischen einer ersten Fügefläche (41) und einer zweiten Fügefläche (42), die zusammen ein Fügefeld bilden, erste und zweite Querschnitte (39, 40) begrenzen und eine Ausgangstemperatur haben, mit einem Laserstrahl (10), der auf einem gegenüber dem Fügefeld kleineren Strahlfeld (35) das Fügefeld trifft, wobei das Strahlfeld (3 5) und das Fügefeld relativ zueinander durch eine Vorschubbewegung so bewegt werden, dass nacheinander aufeinander folgende Feldabschnitte des Fügefeldes schrittweise erwärmt werden, und das Fügefeld auf eine näher bei der Arbeitstemperatur als bei der Ausgangstemperatur liegende Zwischentemperatur vorgewärmt und dann die Feldabschnitte im wesentlichen in einem Durchlauf der Vorschubbewegung von der Zwischentemperatur auf die Arbeitstemperatur gebracht werden, wobei das Strahlfeld (35) kontinuierlich umlaufend entlang einer Längsrichtung des Fügefeldes wiederholt über das Fügefeld geführt wird, bis über das gesamte Fügefeld die Arbeitstemperatur erreicht ist, wobei durch den ersten Querschnitt (39) hindurch mit dem Laserstrahl (10) die zweite Fügefläche (42) des zweiten Querschnitts (40) auf eine Arbeitstemperatur erwärmt und plastifiziert wird und die entstehende Schmelze sich über die Nahtbreite bis zur Anlage an der Fügefläche (41) ausdehnt, wobei die physikalischen Eigenschaften der ersten Fügefläche so gewählt werden, dass der Laserstrahl (10) die erste Fügefläche (41) nicht oder nur geringfügig erwärmt, während für die zweite Fügefläche (42) derartige physikalische Eigenschaften gewählt werden, dass sie den Laserstrahl (10) unter Erwärmung absorbiert, wobei der erste Querschnitt (39) mit dem zweiten Querschnitt (40) in wärmeleitender Verbindung stehend die erste Fügefläche (41) auf im wesentlichen die Arbeitstemperatur erwärmt und ebenfalls plastifiziert, **dadurch gekennzeichnet, dass** das Strahlfeld (35) mehr als zweimal, jeweils in Zeitabständen von höchstens zwei bis drei Sekunden, über das Fügefeld geführt wird.

2. Verfahren nach Anspruch 1, **dadurch gekennzeichnet, dass** die zweite Fügefläche (42) entsprechend der Vorschubbewegung entlang den Feldabschnitten fortschreitend von einer ersten Ausgangstemperatur auf eine erste Zwischentemperatur erwärmt und nach dieser ersten Erwärmung sowie bis zu einer zweiten Erwärmung auf eine erste Mindesttemperatur abkühlen gelassen wird, die oberhalb der ersten Ausgangstemperatur liegt, dass insbesondere die erste Mindesttemperatur näher bei der ersten Zwischentemperatur als bei der ersten Ausgangstemperatur gehalten wird, und dass vorzugsweise der zweiten Erwärmung so viele weitere Erwärmungen folgen, bis der zweite Querschnitt (40) an der zweiten Fügefläche (42) zu einer die erste Fügefläche (41) berührenden zweiten Fließschicht plastifiziert ist, die die Wärme des zweiten Querschnittes (40) durch die erste Fügefläche (41) in den ersten Querschnitt (39) leitet, bis dieser an der ersten Fügefläche (41) zu einer ersten Fließschicht plastifiziert ist und die erste sowie zweite Fließschicht miteinander verschweißen.

3. Verfahren nach einem der vorhergehenden Ansprüche, **dadurch gekennzeichnet, dass** der erste und zweite Querschnitt (39, 40) spätestens unmittelbar vor Erreichen der Arbeitstemperatur gegeneinander gepresst werden, dass insbesondere die Querschnitte (39, 40) bereits beim Vorwärmen gegeneinander gepresst werden, und dass vorzugsweise die Querschnitte (39, 40) vom Vorwärmen bis zur Verbindung der ersten mit der zweiten Fließschicht ununterbrochen gegeneinander gepresst werden.

4. Verfahren nach einem der vorhergehenden Ansprüche, **dadurch gekennzeichnet, dass** die Fügeflächen (41, 42) bei der Erwärmung im Querschnitt durch die Verbindung unter einem Winkel, wie einem spitzen Winkel, zueinander gehalten werden, dass insbesondere die Fügeflächen (41, 42) während der Erwärmung' quer zur Vorschubbewegung und im wesentlichen parallel zu mindestens einer der Fügeflächen (41, 42) gegeneinander gepresst werden.

5. Verfahren nach einem der vorhergehenden Ansprüche, **dadurch gekennzeichnet, dass** vorzugsweise die Querschnitte (39, 40) spätestens bei Erreichen der Arbeitstemperatur gegeneinander bewegt werden, bis sie anschlagbegrenzt relativ zueinander festsitzen, wonach durch Abkühlung der Fließschichten die Verbindung verfestigt wird.

6. Verfahren nach Anspruch 5, **dadurch gekennzeichnet, dass** die Anschlagbegrenzung durch nicht plastifizierte Flächen (43, 44) an den miteinander zu verbindenden Bauteilen (37,38) erfolgt.

7. Verfahren nach einem der vorhergehenden Ansprüche, **dadurch gekennzeichnet, dass** das die Fügeflächen (41, 42) an zwei verschweißenden Bauteilen (37, 38) aufweisende Werkstück stationär gehaltert ist, jedoch die Bauteile (37, 38) unter einer Spannkraft (45, 46) gegeneinander bewegt werden und dass der Energiestrahl (10) die Vorschubbewegung ausführt.

8. Verfahren nach einem der vorhergehenden Ansprüche, **dadurch gekennzeichnet, dass** jeder Feldabschnitt mindestens ein- bis zehnmal je Sekunde mit dem Strahlfeld (35) bestrichen wird, dass insbesondere der Laserstrahl (10) an mindestens einem Spiegel (9) reflektiert und das Strahlfeld (35) durch Bewegen des Spiegels (9) über das Fügefeld bewegt wird, und dass vorzugsweise der Laserstrahl (10) mit einem Gelenkarm eines Roboters über das Fügefeld bewegt wird.

9. Vorrichtung zum Laserschweißen einer Verbindung zwischen einer ersten Fügefläche (41) eines Bauteils (37) und einer zweiten Fügefläche (42) eines weiteren Bauteils (38), wobei die Fügeflächen erste und zweite Querschnitte (39, 40) begrenzen und an einem Fügefeld aus aneinanderschließenden Feldabschnitten zu verbinden sind, wobei eine Halterung (3) mit einer Spannvorrichtung (17) für die die Querschnitte (39, 40) umfassenden Bauteile (37, 38) vorgesehen ist, die bis auf eine Bewegung infolge der Spannkraft der Spannvorrichtung (17) stationär ist und wobei eine bewegliche Strahlführung für einen Laserstrahl (10), mit einem durch den ersten Querschnitt (39) auf die zweite Fügefläche (42) gerichteten Strahlausgang (12) zur Projizierung eines Strahlfeldes (35) des Laserstrahles (10) auf die zweite Fügefläche (42) und eine Strahlführung zur Bewegung des Strahlfeldes (35) entlang der zweiten Fügefläche (42) sowie Steuermittel (30) zur Steuerung der Strahlführung vorgesehen sind und wobei die Steuermittel (30) das Strahlfeld (35) des den ersten Querschnitt (39) durchdringenden, ihn aber nicht oder nur geringfügig erwärmenden Laserstrahles (10) aufeinanderfolgend mehrfach bis zum Erreichen der Schweißtemperatur über jeden der Feldabschnitte führen, **dadurch gekennzeichnet, dass** die Steuermittel (30) das Strahlfeld (35) mehr als zweimal, jeweils mit hoher Geschwindigkeit in Zeitabständen von höchstens zwei bis drei Sekunden, über jeden der Feldabschnitte führen.

10. Vorrichtung nach Anspruch 9, **dadurch gekennzeichnet, dass** der Laserstrahl (10) von der Vorschubeinrichtung (13, 14) motorisch bewegt ist, dass insbesondere der Strahlausgang durch einen Spiegel der Strahlführung, ein Focusier-Objektiv o. dgl. gebildet ist, und dass vorzugsweise die Strahlführung zwei im Strahlgang aufeinanderfolgende Spiegel (9, 9') umfasst, die um quer zueinander bzw. parallel zur jeweils zugehörigen Spiegelebene liegende Achsen (15, 16) unabhängig voneinander drehbar sind.

11. Vorrichtung nach Anspruch 9 oder 10, **dadurch gekennzeichnet, dass** die Spannvorrichtung (17) auswechselbare Spannbacken (21, 22) zur Anlage an den Bauteilen (37, 38) aufweist, und dass vorzugsweise die Steuermittel (30) den Stellweg und/oder die Stellkraft der Spannvorrichtung (17) steuern.

12. Vorrichtung nach Anspruch 11, **dadurch gekennzeichnet, dass** die Spannvorrichtung (17) mindestens einen Aufnehmer (24, 25) zur Messung des Spannweges bzw. der Spannkraft umfassen, dass insbesondere der Aufnehmer (24, 25) über eine Signalleitung (29) mit den Steuermitteln (30) verbunden ist, und dass vorzugsweise die Steuermittel (30) über eine Steuerleitung mit einem Antrieb (20), wie einem Pneumatikzylinder, der Spannvorrichtung (17) verbunden sind.

13. Vorrichtung nach einem der Ansprüche 9 bis 10, **dadurch gekennzeichnet, dass** Anschlagbegrenzungen (43, 44) für die spannkraftbewirkte Bewegung der Bauteile (37, 38) gegeneinander an den Bauteilen (37, 38) oder an der Spannvorrichtung (17) vorgesehen sind.

## Claims

1. A method of laser welding a joint, more particularly for thermoplastics, between a first jointing surface area (41) and a second jointing surface area (42) both together forming a jointing zone which define first and second cross-sections (39, 40) and have a starting temperature, with a laser beam (10) impinging in a beam focus (35) smaller as compared to the jointing zone, the beam focus (35) and the jointing zone being moved by an advance movement relative to each other so that sections of the jointing zone are incrementally heated one after the other in sequence, and the jointing zone is preheated to an intermediate temperature located nearer to the working temperature than to the starting temperature and then the zonal sections being brought from the intermediate temperature to the working temperature substantially in a single pass of the advance movement, the beam focus (35) being guided continually circumferentially along a longitudinal direction of the jointing zone many times repeatedly over the jointing zone until the working temperature is attained, the second jointing surface area (42) of the second cross-section (40) being heated to a working temperature and plasticized by the laser beam (10) through the first cross-section (39) and the resulting melt expanding over the width of the weld up to contact with the jointing surface area (41), the physical properties of the first jointing surface area being selected so that the laser beam (10) heats the first jointing surface area (41) not at all or only slightly, whilst for the second jointing surface area (42) the physical properties are selected such that it absorbs the laser beam (10) in being heated, the first cross-section (39) in heat-conductive connection with the second cross-section (40) heating and plasticizing the first jointing surface area (41) substantially to the working temperature, **characterized in that** the beam focus (35) is guided over the jointing zone more than twice in time intervals of maximally two to three seconds.

2. The method as set forth in claim 1, **characterized in that** corresponding to the advance movement the second jointing surface area (42) is heated along the zonal sections progressively from a first starting temperature to a first intermediate temperature and after this first heating procedure as well as up to a second heating procedure is allowed to cool down to a first minimum temperature which is above the first starting temperature, more particularly the first minimum temperature being maintained nearer to the first intermediate temperature than to the first starting temperature, and preferably the second heating procedure being followed by as many further heating procedures as necessary until the second cross-section (40) at the second jointing surface area (42) is plasticized into a second flux layer contacting the first jointing surface area (41), this flux layer directing the heat of the second cross-section (40) through the first jointing surface area (41) into the first cross-section (39) until the latter is plasticized at the first jointing surface area (41) into a first flux layer and the first and second flux layer interweld.

3. The method as set forth in any of the preceding claims, **characterized in that** the first and second cross-sections (39, 40) are pressed against each other directly before attaining the working temperature at the latest, more particularly the cross-sections (39, 40) being pressed against each other already during preheating and preferably the cross-sections (39, 40) being pressed against each other uninterruptedly until the first flux layer is joined to the second flux layer.

4. The method as set forth in any of the preceding claims, **characterized in that** during heating through the joint the jointing surface areas (41, 42) are held together cross-sectionally at an angle, such as an acute angle, more particularly the jointing surface areas (41, 42) being pressed against each other during the heating transversely to the advance movement and substantially parallel to the at least one of the jointing surface areas (41, 42).

5. The method as set forth in any of the preceding claims, **characterized in that** the cross-sections (39, 40) are moved against each other at the latest on attaining the working temperature until they are fixedly located relative to each other as defined by stops after which the joint is solidified by cooling the flux layers.

6. The method as set forth in claim 5, **characterized in that** defining the stops is done by non-plasticized surface areas (43, 44) at the components (37, 38) to be joined to each other.

7. The method as set forth in any of the preceding claims, **characterized in that** the workpiece comprising the jointing surface areas (41, 42) at two components (37, 38) to be joined to each other is held stationary, but the components (37, 38) are moved against each other subject to a clamping force (45, 46) and that the laser beam (10) implements the advance movement.

8. The method as set forth in any of the preceding claims, **characterized in that** each zonal section is scanned once to ten times per second with the beam focus (35), more particularly the laser beam (10) being reflected by at least one mirror (9) and the beam focus (35) being moved by moving the mirror (9) over the jointing zone, and preferably the laser beam (10) being moved by the articulated arm of a robotic device over the jointing zone.

9. An apparatus for laser welding a joint between a first jointing surface area (41) of a component (37) and a second jointing surface area (42) of a further component (38), the jointing surface areas defining first and second cross-sections (39, 40) and are to be joined to a jointing zone of adjoining zonal sections, comprising a mount (3) with a clamping device (17) for the components (37, 38) comprising the cross-sections (39, 40) which is stationary except for a movement due to the clamping force of the clamping device (17) and provided with means for guiding a laser beam (10) including a beam output (12) directed through the first cross-section (39) onto the second jointing surface area (42) for projecting a beam focus (35) of the laser beam (10) onto the second jointing surface area (42), including a means for advancing the beam focus (35) along the second jointing surface area (42), and including means (30) for controlling the advance movement means, the control means (30) guiding the beam focus (35) of the laser beam (10) penetrating the first cross-section (39) in not heating it at all, or only slightly, multiply in sequence until attaining the welding temperature over each of the zonal sections, **characterized in that** the control means (30) guides the beam focus (35) more than twice at high speed over each of the zonal sections in time intervals of maximally two to three seconds.

10. The apparatus as set forth in claim 9 **characterized in that** the laser beam (10) is powered by the advance movement means (13, 14), more particularly the beam output being formed by a mirror for beam steering, a focussing objective lens or the like and preferably the beam steering means comprising two mirrors (9, 9') in the beam path in sequence rotatable independently of each other about axes (15, 16) located transversely to each other or parallel to the corresponding mirror plane in each case.

11. The apparatus as set forth in in claim 9 or 10, **characterized in that** the clamping device (17) comprises interchangeable clamping jaw pads (21, 22) for contacting the components (37, 38) and preferably the control means (30) controlling the positioning travel and/or positioning force of the clamping device (17).

12. The apparatus as set forth in claim 11, **characterized in that** the clamping device (17) comprises at least one sensor (24, 25) for sensing the clamping travel and/or clamping force, more particularly the sensor (24, 25) being connected via a signal cable (29) to the control means (30) and preferably the control means (30) being connected via a control cable to an actuator (20) such as a pneumatic cylinder of the clamping device (17).

13. The apparatus as set forth in any of the claims 9 to 10, **characterized in that** stops (43, 44) defining the movement of the components (37, 38) against each other, resulting in the clamping force, are provided on the components (37, 38) or on the clamping device (17).

## Revendications

1. Procédé pour le soudage d'un joint, notamment pour matières thermoplastiques, entre une première surface d'assemblage (41) et une deuxième surface d'assemblage (42), qui forment ensemble un champ d'assemblage, qui délimitent des premières et des deuxièmes sections transversales (39, 40) et qui présentent une température initiale, avec un rayon laser (10) qui touche le champ d'assemblage dans un champ d'irradiation (35) beaucoup plut petit que le champ d'assemblage, le champ d'irradiation (35) et le champ d'assemblage étant déplacés l'un par rapport à l'autre par un mouvement d'avance, de manière que des zones consécutives, au sens temporel, du champ d'assemblage sont progressivement chauffées, et le champ d'assemblage étant préchauffé à une température intermédiaire plus proche de la température de travail que de la température initiale et les sections de champ étant ensuite portées d'une température intermédiaire à la température de travail essentiellement en une seule course du mouvement d'avance, le champ d'irradiation (35) étant mené sur le champ d'assemblage dans un mouvement continu à plusieurs reprises le long d'une direction longitudinale du champ d'assemblage, jusqu'à ce que la température de travail soit atteinte sur la totalité du champ d'assemblage, la deuxième surface d'assemblage (42) de la deuxième section transversale (40) étant chauffée à la température de travail et étant plastifiée par un rayon laser (10) traversant la première section transversale (39), et la fonte qui se crée s'étendant sur la largeur du joint de soudage jusqu'au contact avec la surface d'assemblage (41), les propriétés physiques de la première surface d'assemblage étant choisies de manière que le rayon laser (10) ne chauffe pas la première surface d'assemblage (41) ou seulement de façon légère, tandis que les propriétés physiques de la deuxième surface d'assemblage (42) étant choisies de façon qu'elle absorbe le rayon laser (10) en se chauffant, où la première section transversale (39) qui présente un contact à conduction de chaleur avec la deuxième section transversale (40) chauffe et plastifie la première surface d'assemblage (41) essentiellement à la température de travail, **caractérisé en ce que** le champ d'irradiation (35) est mené plus de deux fois sur le champ d'assemblage respectivement au maximum tous les deux à trois secondes.

2. Procédé d'après la revendication 1, **caractérisé en ce que** la deuxième surface d'assemblage (42) est chauffée, conformément au mouvement d'avance le long des section de champ, à partir d'une première température initiale à une première température intermédiaire, et que, après ce premier chauffage, jusqu'à un deuxième chauffage, on la fait refroidir à une première température minimale située au-dessus de la première température initiale, **en ce que** notamment la première température minimale est maintenue plus proche de la première température intermédiaire que de la première température initiale, et **en ce que** de préférence on produit tant d'autres chauffages après le deuxième chauffage, jusqu'à ce que la deuxième section transversale (40) soit plastifiée dans le domaine de la deuxième surface d'assemblage (42), en étant devenue une deuxième couche fluidisée qui touche la première surface d'assemblage (41) et qui conduit la chaleur de la deuxième section transversale (40) dans la première section transversale (39) en passant par la première section d'assemblage (41), jusqu'à ce que la première section transversale soit plastifiée dans le domaine de la première surface d'assemblage (41), en étant devenue une première couche fluidisée et que la première et la deuxième couche fluidisée soient soudées.

3. Procédé d'après une des revendications précédentes, **caractérisé en ce que** la première et la deuxième section transversale (39, 40) sont serrées l'une contre l'autre au plus tard directement avant que la température de travail soit atteinte, **en ce que** notamment les sections transversales (39, 40) sont serrées l'une contre l'autre déjà pendant le préchauffage, et **en ce que** de préférence les sections transversales (39, 40) sont serrées l'une contre l'autre continuellement du préchauffage jusqu'au raccordement de la première et de la deuxième couche fluidisée.

4. Procédé d'après une des revendications précédentes, **caractérisé en ce que** pendant le chauffage les surfaces d'assemblage (41, 42) sont maintenues par le raccordement sous un certain angle, comme un angle aigu en section transversale, **en ce que** notamment les surfaces d'assemblage (41, 42) sont serrées pendant le chauffage l'une contre l'autre, transversalement par rapport à la direction d'avance et essentiellement en direction parallèle par rapport à au moins une des surfaces d'assemblage (41, 42).

5. Procédé d'après une des revendications précédentes, **caractérisé en ce que** de préférence les sections transversales (39, 40) sont déplacées l'une contre l'autre au plus tard quand la température de travail est atteinte, jusqu'à ce qu'elles soient immobilisées l'une par rapport à l'autre, le mouvement étant limitées par arrêt, après quoi le raccord étant solidifié par refroidissement des couches fluidisées.

6. Procédé d'après la revendication 5, **caractérisé en ce que** la délimitation par arrêt a lieu auprès des éléments constitutifs (37, 38) qui sont à raccorder, par des surfaces (43, 44) non plastifiées.

7. Procédé d'après une des revendications précédentes, **caractérisé en ce que** la pièce d'oeuvre, présentant les surfaces d'assemblage (41, 42) sur deux éléments constitutifs (37, 38) qui sont à souder, est retenue en lieu fixe, mais que les éléments constitutifs (37, 38) sont déplacés l'un contre l'autre sous un effort de tension (45, 46) et **en ce que** le rayon d'énergie (10) effectue le mouvement d'avance.

8. Procédé d'après une des revendications précédentes, **caractérisé en ce que** chaque section de champ est balayée par le champ d'irradiation (35) au moins une fois jusqu'à dix fois par seconde, **en ce que** notamment le rayon laser (10) est réfléchi au moins par un miroir (9) et que le champ d'irradiation (35) est déplacé sur le champ d'assemblage par le déplacement du miroir (9), et **en ce que** de préférence le rayon laser (10) est déplacé sur le champ d'assemblage par un bras articulé d'un robot.

9. Dispositif pour le soudage par laser d'un raccordement entre une première surface d'assemblage (41) d'un élément de construction (37) et une deuxième surface d'assemblage (42) d'un autre élément de construction (38), les surfaces d'assemblage délimitant des premières et des deuxièmes sections transversales (39, 40) et étant à raccorder dans un champ d'assemblage composé de sections de champ qui s'ensuivent, un support (3) avec un dispositif de serrage (17) étant prévu pour les éléments constructifs (37, 38) comprenant les sections transversales (39, 40), ce support étant stationnaire à part pour un mouvement dû à la force de serrage du dispositif de serrage (17) et un guidage du faisceau mobile pour un rayon laser (10) étant prévu avec une sortie de faisceau (12) dirigée sur la deuxième surface d'assemblage (42) à travers la première section transversale (39) pour la projection d'un champ d'irradiation (35) du rayon laser (10) sur la deuxième surface d'assemblage et pour un guidage du faisceau pour déplacer le champ d'irradiation (35) le long de la deuxième surface d'assemblage (42), et avec des moyens de commande (30) pour le contrôle du guidage de faisceau, et les moyens de commande (30) conduisant le champ d'irradiation (35) du rayon laser (10), traversant la première section transversale (39) sans ou presque sans l'échauffer, consécutivement plusieurs fois sur chacune des sections de champ jusqu'à ce que la température de soudage soit atteinte, **caractérisé en ce que** les moyens de commande (30) conduisent le champ d'irradiation (35) à grande vitesse sur chaque section de champ respectivement plus que deux fois au plus tous les deux à trois secondes.

10. Dispositif d'après la revendication 9, **caractérisé en ce que** le rayon laser (10) est déplacé en étant commandé par moteur par le dispositif d'avance (13, 14),**en ce que** notamment la sortie du faisceau est formé par un miroir du guidage de faisceau, un objectif de focalisation ou similaires et **en ce que** de préférence le guidage de faisceau comprend deux miroirs (9, 9') consécutifs le long du trajet de faisceau, qui sont rotatifs indépendamment l'un de l'autre autour des axes (15, 16) transversaux l'un par rapport à l'autre ou encore respectivement parallèles par rapport au plan de miroir correspondant.

11. Dispositif d'après la revendication 9 ou 10, **caractérisé en ce que** le dispositif de serrage (17) présente des mâchoires de serrage (21, 22) interchangeables pour la juxtaposition auprès des éléments de construction (37, 38) et **en ce que** de préférence les moyens de commande (30) commandent le parcours de réglage et/ou la puissance de réglage du dispositif de serrage (17).

12. Dispositif d'après la revendication 11, **caractérisé en ce que** le dispositif de serrage (17) comprend au moins un capteur (24, 25) pour le mesurage de la voie de serrage ou encore de la puissance de serrage, **en ce que** notamment le capteur (24, 25) est raccordé aux dispositifs de commande (30) par un circuit d'acheminement des signaux (29), et **en ce que** les dispositifs de commande (30) sont raccordés par une ligne pilote au moyen d'un actionnement (20), comme un vérin pneumatique, du dispositif de serrage (17).

13. Dispositif d'après une des revendications de 9 à 10, **caractérisé en ce qu'**on prévoit sur les éléments de construction (37, 38) ou sur le dispositif de serrage (17) des délimitations par arrêt (43, 44) pour le mouvement réciproque , produit par la force de serrage, des éléments de construction (37, 38).
